# EUROPÄISCHE PATENTSCHRIFT

(11) **EP 1 375 129 B1**
(45) Veröffentlichungstag und Bekanntmachung des Hinweises auf die Patenterteilung: **15.09.2010**
(21) Anmeldenummer: 03014722.7
(22) Anmeldetag: 27.06.2003
(51) Int. Cl.: B32B 5/16, B32B 37/04, B32B 37/24

(54) **Verfahren zur Herstellung einer Kunststoffplatte und Kunststoffplatte**
Method of forming a plastic plate and a plastic plate
Procédé pour fabriquer une plaque en matière plastique et plaque en matière plastique

(30) Priorität: 27.06.2002 DE 10228862
(43) Veröffentlichungstag der Anmeldung: 02.01.2004
(73) Patentinhaber: Lucobit AG, 50389 Wesseling (DE)
(72) Erfinder: Rödlich, Axel, 48157 Münster (DE)
(74) Vertreter: Bungartz, Klaus Peter

(56) Entgegenhaltungen:
- WO-A-95/22359
- DE-A- 2 444 091
- DE-A- 10 000 644
- GB-A- 1 552 234
- US-A- 3 616 162
- US-A- 4 769 274

## Beschreibung

Die Erfindung betrifft ein Verfahren zur Herstellung einer Kunststoffplatte in einem Preßverfahren wobei in eine Preßform eine erste Schicht aus rieselfähigen Partikeln eines ersten Kunststoffmaterials eingebracht wird, diese erste Schicht dann gepreßt und erhitzt wird, bis die Partikel aufschmelzen und anschließend die so entstandene Platte entnommen wird. Ferner betrifft die Erfindung eine nach diesem Verfahren hergestellte Kunststoffplatte.

Ein Verfahren der eingangs genannten Art und eine nach diesem Verfahren hergestellte Kunststoffplatte sind aus der deutschen Patentanmeldung 100 00 644 bekannt. Bei dem dort bekannten Verfahren werden Kunststoffplatten mit einem steinartigen Aussehen hergestellt, in dem Granulat bzw. ein Mahlgut aus thermoplastischem Kunststoff scherungsfrei miteinander verpreßt wird. Durch Verzicht auf Mineralstoffe wird die Verarbeitbarkeit der Kunststoffplatte verbessert und der so hergestellte Formkörper kann Thermoformanwendungen unterzogen werden. Als Material wird ein Polyvinylchlvrid (PVC) oder ein Polyethylenterephthalat (PET) ohne Einschränkung auf diese beiden thermoplastischen Werkstoffe vorgeschlagen.

Die bekannte Kunststoffplatte kann zweiteilig ausgebildet sein, wobei eine Deckplatte auf eine Trägerplatte angeordnet wird. Es wird vorgeschlagen, die Deckplatte mit der Trägerplatte zu verkleben bzw. zu verschweißen. Ziel der zweiteiligen Ausgestaltung ist, daß beispielsweise die Trägerplatte als Brandschutzplatte ausgebildet sein kann, während die Deckplatte zur Erzielung des optischen Effektes, also etwa eines steingutartigen Aussehens, ausgestaltet wird.

Obwohl die aus der genannten Patentanmeldung bekannte Kunststoffplatte bereits sehr gute Materialeigenschaften aufweist, hat sie jedoch den Nachteil, daß die Trägerplatte und die Deckplatte miteinander verbunden werden müssen. Dies erfordert nicht nur ein thermisches Fügeverfahren oder einen Verbund mittels Klebe- oder Haftvermittlungsschicht, sondern auch einen weiteren Arbeitsschritt mit entsprechender Prozessdauer und zusätzlichen Kostenaufwand. Schließlich beinhaltet nachträgliche Verbindung immer die Gefahr, daß sich die Komponenten im Einsatz wieder voneinander lösen.

Ferner kann die Verbindungsfläche zu Problemen bei nachfolgenden Fügeverfahren führen, etwa wenn sich infolge einer Hitzeeinwirkung eines thermischen Fügeverfahrens ein früherer Haftverbund wieder löst. Schließlich weisen Kunststoffklebeverbindungen immer den Nachteil auf, daß sie verhältnismäßig anfällig gegen Scherbelastungen sind, so daß sich bei einer Belastung der Kunststoffplatte mit einer zur Oberfläche vertikal gerichteten Kraft eine Gefahr ergibt, daß sich die beiden Komponenten voneinander lösen.

Insbesondere wenn eine solche Kunststoffplatte beispielsweise als Bodenbelag in einem Viehstall eingesetzt wird, ist jedoch die sichere Verbindung zwischen der Trägerplatte und der Deckplatte wichtig, da die verhältnismäßig schweren Tiere nicht nur eine Schwerbelastung auf die beiden Bauteile durch Huftritte aufbringen, sondern auch infolge der Langeweile während des Verbleibens im Stall dazu neigen, in den Bodenbelag zu beißen und den Oberbelag abzuziehen. Damit dies nicht zu einer Schädigung des Bodenbelages führt, muß es dem Vieh möglichst unmöglich gemacht werden, eine obere Deckschicht abzuziehen. Ist einmal ein solcher Anfang gemacht, wird schnell der gesamte Bodenbelag zerstört sein, da hochstehende Bereiche der Deckschicht zum weiteren Verbeißen reizen.

Aus der US-A-3616162 ist wiederum ein Verfahren bekannt, bei dem innerhalb zwei Schichten eines thermoplastischen Materials auf einem Förderband abgesetzt und nachfolgend zu einer Verbundplatte verpreßt werden. Dieses Verfahren leidet ebenfalls unter dem Nachteil, daß Scherkräfte von der erzeugten Platte nur unzureichend aufgenommen werden können, da ausschließlich die aufgrund der Klebwirkung erzeugten Haftkräfte beider Schichten die Verbindung der einzelnen Teilplatten bewirkt.

Aus der DE-A-24 44 091 ist ein Verfahren zum Recyceln von zerkleinerten Kunststoffteilchen bekannt. Bei diesem Verfahren werden die Kunststoffteilchen auf ein Band ausgebracht und mit einem Granulat vermischt, wobei das Granulat die Funktion einer Bindematrix einnimmt, in der die Kunststoffteilchen gehalten sind. Eine solchermaßen hergestellte Platte kann aber keine Materialeigenschaften aufweisen, die zwischen Ober- und Unterseite der Verbundplatte unterschiedet. Vielmehr handelt es sich hier um einen Verbundwerkstoff, der ähnlich einem Faserverbundwerkstoff eine Mischung aus den verschiedenen Materialeigenschaften der einzelnen Komponenten aufweist, wobei die jeweils dominante Eigenschaft einer Komponente überwiegt.

Aus der GB-A-1 552 234 ist wiederum eine zweischichtig Kunstplatte bekannt, die eine unscharfe Begrenzungsfläche zwischen der ersten Schicht und der zweiten Schicht aufweist und durch aufeinanderstreuen der Partikel beider Schichten mit nachfolgendem Schmelzvorgang herstellt wird. Obwohl diese Platte bereits eine gewisse Steigerung der aufnehmbaren Querkräfte erlaubt, ist es bei dem beschriebenen Verfahren insbesondere nicht möglich, die maximal ertragbaren Kräfte in Richtung senkrecht zur Plattenoberftäche nennenswert zu steigern.

Aus der US-A-4769274 und der WO-A-9522359 sind schließlich Kunststoffplatten bekannt, bei denen ebenfalls, wie bereits bei der eingangs erwähnten DE-A 10000644, über ein Verpressen granulierter Partikellagen ein klebender Verbund zweier Schichten hergestellt wird. Auch hier ist eine erhebliche Steigerung der maximal erträglichen Abziehkraft kaum zu verzeichnen.

Aufgabe der Erfindung ist es daher, ein Verfahren zur Herstellung einer Kunststoffplatte sowie eine nach diesem Verfahren hergestellte Kunststoffplatte zu schaffen, bei dem die Deckschicht auch in Querrichtung sicher und fest an der unteren Schicht bei möglichst noch reduzierten Herstellungskosten haftet.

Bezüglich des Herstellungsverfahrens wird nach der Erfindung diese Aufgabe durch ein Verfahren zur Herstellung einer, aus zumindest einer ersten und einer zweiten Schicht bestehenden Kunststoffplatte in einem Preßverfahren, wobei
- In eine Preßform eine erste Schicht aus rieselfähigen Partikeln eines ersten Kunststoffmaterials eingebracht wird,
- eine zweite Schicht aus rieselfähigen Partikeln eines zweiten Kunststoffmaterials auf die erste Schicht aufgebracht wird,
- dann die erste Schicht und die zweite Schicht derart erhitzt werden, daß das Material der zweiten Schicht vor dem Material der ersten Schicht schmilzt und flüssiges Material der zweiten Schicht in Bereiche zwischen noch gekörntem Material eines oberen Grenzbereichs der ersten Schicht fließt, wobei sich eine Grenzschicht ausbildet, innerhalb derer sich das aufgeschmolzene Material der zweiten Schicht und das Material der ersten Schicht gegenseitig durchsetzen und
- die erste Schicht und die zweite Schicht gepreßt und erhitzt werden, bis alle Partikel aufschmelzen, dann
- die Kunststoffplatte erkalten, wobei die erste Schicht und die zweite Schicht mit oder ohne Hinterschneidungen formschlüssig miteinander verbunden sind und
- anschließend die so entstandene Platte entnommen wird.

Eine auf diese Weise hergestellte Kunststoffplatte löst die Aufgabe bezüglich des Erzeugnisses.

Die neugeschaffene Kunststoffplatte wird beispielsweise als Bodenbelag eines Viehstalles eingesetzt. Sie hat den besonderen Vorteil, dass neben der durch den Pressvorgang einhergehenden spannungsarmen bzw. verzugsarmen Platte die erste und die zweite Schicht infolge des besonderen Herstellungsverfahrens ohne besonderen, zusätzlichen Fügeverbindungsschritt miteinander verbunden sind, wobei diese Verbindung besonders dauerhaft und belastungsfest ist. Bei einer bevorzugten Ausgestaltung der Erfindung sind die erste und die zweite Schicht aus jeweils anderem Material gefertigt, wobei die Materialien unterschiedliche Schmelztemperaturen aufweisen können.

Zur Durchführung des erfindungsgemäßen Verfahrens wird in eine Pressform eine erste Schicht aus einem rieselfähigen Kunststoffmaterial eingebracht. Üblicherweise werden dies Granulatkörner eines thermoplastischen Rohmaterials sein. Auf diese erste Schicht, die bevorzugt wohl so aufgebracht werden wird, dass sie eine ebene Oberfläche aufweist, obwohl dies nicht unbedingt erforderlich ist und je nach Einsatzzweck auch anders gehandhabt werden kann, wird dann eine zweite Schicht aufgebracht, die ebenfalls aus rieselfähigem Kunststoffmaterial besteht. Üblicherweise wird dies ein anderes Material als das erste Material sein, damit durch Auswahl der Materialkombinationen die gewünschten Eigenschaften der Kunststoffplatte eingestellt werden können. So kann beispielsweise die untere Trägerplatte aus einem elastischen Material gefertigt werden, während die obere Schicht aus einem eher harten, formstabilen und damit robusteren Material hergestellt werden kann.

Im Vergleich mit den bekannten Verfahren, bei denen die Kunststoffplatte im Rahmen einer kontinuierlichen Extrusion oder im Spritzgussverfahren hergestellt wird, weist das erfindungsgemäße Pressverfahren den Vorzug auf, dass die Platte mit sehr geringen Eigenspannungen ausgestattet ist und sich nur ein geringer Verzug einstellt. Dies liegt daran, dass beim Pressprozess die Orientierung der Molekülketten nicht verändert wird und sich die Eigenspannungen nur auf den eigenen Schrumpf der eingesetzten Rohstoffe beschränkt, während bei Extrusion oder Spritzguss immer ein zusätzlicher Längs- oder Querschrumpf infolge des Schmelzeflusses entsteht.

Wesentliches Merkmal der Erfindung ist die Tatsache, dass die erste Schicht während des Schmelz- bzw. Pressvorganges mit der zweiten Schicht aufgrund der Partikelkörnung (z.B. Granulat) eine nicht ganz glatte Grenzschicht ausbildet, in der sich die beiden Materialien der ersten und der zweiten Schicht gegenseitig durchsetzen.

In der Regel wird dies dadurch geschehen, dass das obere Material der zweiten Schicht vor dem Material der darunter angeordneten ersten Schicht aufschmilzt. Dies bewirkt ein Hineinfließen des flüssigen Materials der zweiten Schicht in die oberen Grenzbereiche des noch gekörnten, unaufgeschmolzenen Materials der unteren ersten Schicht.

Dies kann beispielsweise dadurch geschehen, dass die beiden eingesetzten Materialien unterschiedliche Schmelzpunkte haben. Bei kontinuierlicher Erhitzung der Pressform wird zunächst das Material der oberen zweiten Schicht aufschmilzen, im unteren Bereich teilweise in die obere Schicht der unteren ersten Schicht hereinsickern, bevor dann auch das Material der ersten Schicht aufschmilzt und so einen weiteren Diffusionsvorgang infolge der nun sich auflösenden Grobkörnigkeit unterbindet.

Alternativ kann die Pressform auch von beiden Seiten aus beheizt werden, so dass auch eine Verbindung von Materialien mit gleichen bzw. ähnlichen Schmelztemperaturen möglich wird. Durch gezieltes Anheizen bzw. Abkühlen der unteren oder oberen Formbegrenzung kann das Diffusionsverhalten der Schmelze gezielt beeinflusst werden. Ferner ist es möglich, über den Anpressdruck der Pressform das Diffusionsverhalten zusätzlich zu beeinflussen.

So kann beispielsweise zunächst ein Druck aufgebracht werden, der die Größe der offenen Poren in der unteren ersten Schicht verringert, so dass es für das aufgeschmolzene Material der oberen zweiten Schicht schwieriger wird, in die untere Schicht hineinzusickern. Ist dagegen das Ausbilden einer größeren Grenzschicht erwünscht, kann der Druck erst nach einer bestimmten Heizphase aufgebracht werden, so dass das untere Material der ersten Schicht noch verhältnismäßig offenporig vorliegt.

Umgekehrt kann bei Anbringen einer größeren Temperatur die Viskosität des aufgeschmolzenen Materials der oberen zweiten Schicht herabgesetzt werden, so dass dieses aufgeschmolzene Material besonders leicht und einfach in die Poren der unteren, noch partikelförmigen ersten Schicht einsickern kann. Um ein Aufschmelzen der unteren Schicht zu verhindern, kann es praktikabel sein, die untere Schicht über eine Kühlung herabzukühlen, damit dort kein Material aufschmilzt.

Ein weiterer besonders einfacher Weg, eine zu große Grenzschicht zu vermeiden, besteht darin, zwischen den beiden Schichten eine weitere Schicht, zum Beispiel eine Sperrschicht anzuordnen, die etwa von einer eingelegten Folie gebildet sein kann. Weist diese Folie nun einen höheren Schmelzpunkt auf, als das Material der oberen zweiten Schicht, wird sie zunächst das Einsickern des flüssigen Kunststoffes in die Poren der unteren ersten Schicht verhindern, bis deren Schmelzpunkt erreicht ist oder bis durch den Pressdruck die infolge der Temperaturerhöhung elastische Folie ebenfalls in die Poren des unteren Materials der ersten Schicht eingedrückt wird. Es kann dabei ausreichend sein, dass eine formschlüssige Verbindung ohne Hinterschneidungen entsteht, so wie es etwa der Fall ist, wenn nur die Folie an die Oberfläche der körnigen Partikel der unteren ersten Schicht angedrückt wird. Bereits diese einfache Verbindung wird eine größere Scherbelastung der dann thermischen Klebestelle zulassen.

Eine bessere Verbindung und ein sicherer Halt wird jedoch erreicht, wenn Hinterschneidungen dadurch entstehen, dass das Material der oberen zweiten Schicht vollständig so in die Poren der unteren ersten Schicht einsickert, dass es zu einer regelrechten aderartigen Verzahnung durch Materialhinterschneidungen der beiden Schichten kommt.

Eine zwischen die beiden Schichten eingelegte Folie ist bevorzugt eine Kunststofffolie, die aus einem thermoplastischen Material besteht. Diese thermoplastische Folie kann dann besonders einfach aufschmelzen und, sofern sie dünn genug gehalten wird, mit ihren Materialeigenschaften fast untergehen. Alternativ kann natürlich auch eine Zwischenschicht als funktionelle Schicht so gewählt werden, dass deren Materialeigenschaften zu den günstigen Funktionseigenschaften der Kunststoffplatte beitragen. Auf diese Weise kann eine dritte Schicht vorgesehen werden, die etwa eine Dämpfung oder Dämmung zwischen der unteren und der oberen Teilplatte der späteren Kunststoffplatte bewirkt.

Eine solche weitere Zusatzschicht kann etwa aus einem elastischen Kunststoff bestehen oder auch sonstige Eigenschaften aufweisen, Infrage kommen insbesondere Sperrschichten, die etwa als elektrisch leitfähige Schichten oder als Flüssigkeitssperren eingesetzt werden können. Auch eine gasdichte Sperrschicht kann vorgesehen sein, was insbesondere dann sinnvoll ist, wenn die Kunststoffplatte an ihrer Oberseite bestimmten Anforderungen genügen muss, denen jedoch die untere Seite, als das Material der ersten Schicht, nicht genügt. So kann etwa eine toxische oder gesundheitsschädliche Wirkung einer unteren ersten Schicht durchaus in Kauf genommen werden, wenn der Anwender durch die Sperrwirkung der Zwischenschicht mit dieser toxischen Schicht nicht in Verbindung kommen kann.

Bei der Verwendung der Platte als Bodenbelag eines Viehstalles kann die Zwischenschicht eine Resistenz gegen auftretende Harnstoffe oder ähnliche Ablagerungen gewährleisten, so dass diese Eigenschaft von der unteren ersten Schicht nicht mehr erfüllt werden muss. Insbesondere bei Viehstallbelägen besteht die Gefahr, dass das Vieh die oberste erste Schicht anbeißt und versucht, diese Schicht von der unteren Trägerschicht abzuziehen. Gerade hier ist ein wirkungsvoller Verbund zwischen den beiden Schichten infolge der formschlüssigen Verbindung notwendig.

Die obere Deckschicht, die von der zuerst aufschmelzenden zweiten Schicht gebildet ist, kann beispielsweise elastische Eigenschaften aufweisen, damit das Vieh "sowohl gelenkschonend auftreten kann, sich somit das Verletzungsrisiko bei Stürzen erheblich reduziert und der Trittschall gemindert wird. Die untere aus der ersten Schicht gebildete Trägerschicht kann eine hohe Stabilität aufweisen, insbesondere eine Bruchstabilität, so dass sich ein stabiler, effektiver und funktioneller Bodenbelag ergibt. Eine möglicherweise optional eingebrachte Trennschicht zwischen der ersten und der zweiten Schicht kann als Durchlaufschutz, etwa für Urin, dienen.

Ein weiterer Einsatzzweck der erfindungsgemäßen Kunststoffplatte ist der Bodenbelag im Spielplatzbereich oder als Begehungsplatten. Hier kann die obere, aus der zweiten Schicht gebildete Deckschicht ausreichend elastisch sein, damit sich das Verletzungsrisiko reduziert, zum Beispiel bei Kindern im Sturzfall, insbesondere unter Klettergerüsten. Da gerade bei Spielplätzen sehr hohe mechanische Belastungen, möglicherweise auch durch mutwillige Beschädigungsversuche, entstehen können, kann die untere, aus der ersten Schicht gebildete Trägerschicht eine entsprechende Stabilität aufweisen. Hier können insbesondere auch Recyclingmaterialen verwendet werden, die als Mahlgut in die Pressform eingegeben werden. Weil im Falle von Recyclingmaterialen oft das Problem besteht, dass Schwermetall oder sonstige toxische Rückstände nicht ausgeschlossen werden können, kann durch eine trennende Zwischenschicht vermieden werden, dass das Kind mit der toxischen Unterseite in Verbindung kommt. Auf diese Weise kann Recyclingmaterial bedenkenlos für derartige Einsatzzwecke eingesetzt werden.

Dem Kunststoff der Deckplatte kann zusätzlich weiteres Additiv zugesetzt werden, um so eine Langlebigkeit für Außeneinsätze, z.B. bei Flachdächern, Sportplätzen, Spielplätzen oder Schwimmbädern zu erreichen. Die Additive können UV-, Bio- oder Chlorstabilisatoren sein.

Die Platte kann zur sogenannten Stadtmöblierung oder auch als Abschlussbelag für Straßenbeläge eingesetzt werden. So kann etwa eine erfindungsgemäße Kunststoffplatte nach der Art einer Intarsie Teil eines Zebrastreifens sein oder die Mittellinie einer Fahrbahnmarkierung bilden. Auch im Deichbau, beim Einsatz von Hochwasserschutzdämmen gegen drückendes Wasser oder als Fertigbauteil für den Treppenbau kann die Platte eingesetzt werden.

Das Aufeinanderpressen zweier Platten gleichen Materials ergibt eine verhältnismäßig stabile und feste Verbindung. Schwierig wird es in der Regel dann, wenn unterschiedliche Materialien gewählt werden, also zwei fertige Kunststoffplatten durch Aufeinanderpressen miteinander verbunden werden sollen. Hier hat sich das erfindungsgemäße Verfahren als besonders effektiv und einfach herausgestellt. Sollen nun Platten mit mehreren Schichten hergestellt werden, kann nach einem der oben beschriebenen Verfahrensabläufe eine zwei- oder dreischichtige Platte hergestellt werden.

Werden noch mehr Schichten benötigt, kann diese Platte dann gedreht werden, auf die dann obenliegende Oberseite des Trägermaterials weiteres Material der ersten Schicht aufgestreut werden, das dann nach den Merkmalen der bereits beschriebenen Verfahrensschritte mit weiteren Schichten versehen werden kann. Anschließend kann durch erneute Press- und Heizvorgänge auch dieser Schichtenstapel aufgeschmolzen und fest miteinander verbunden werden. Muss vermieden werden, dass sich infolge des Aufheizens das bereits fertig plastifizierte Material des dann unten liegenden Stapels versetzt, kann dieses Material durch eine externe Kühlung auf einem Temperaturniveau gehalten werden, das für die eingesetzten Materialien unkritisch ist.

Muss dagegen zusätzliche Wärme aufgebracht werden, ohne dass diese von der Unterseite durch das bereits fertig plastifizierte Material eingebracht werden kann, kann bei aufwendigen Kunststoffplatten ein Leiternetz eingelegt werden, so dass über die elektrische Widerstandserwärmung Wärme in diese Zwischenschichten eingebracht werden kann. Dieses Verfahren, bei dem die Leiterbahnen dann als verlorenes Material gleichzeitig zur Armierung der Platte dienen, wird jedoch nur beim sehr aufwendigen Platten empfehlenswert sein.

Eine bevorzugte Anlage zur Herstellung der Formplatten weist eine stationäre Press-/Heizanlage auf, innerhalb derer die Form zum Erstellen der Kunststoffplatte angeordnet ist. Es ist jedoch bei einer weiteren bevorzugten Ausgestaltung der Erfindung auch möglich, eine kontinuierliche Anlage aufzubauen, so dass in einer ersten Station die erste Schicht und die zweite Schicht auf einem kontinuierlich bewegten Formträger aufgebracht wird, anschließend hinter dieser Station in einer zweiten Station die Erhitzung der aufgebrachten Schichten erfolgt, wobei dann beide Schichten in der dritten Station verpresst werden, was beispielsweise durch gegeneinander angestellte Pressrollen erfolgen kann.

Im Falle eines getakteten Laufbandes ist es auch möglich, von oben und unten jeweils gegeneinander drückende oder einzelne, gegen einen Widerlagerstempel drückende Pressstempel vorzusehen. Das kontinuierliche bzw. getaktete Fertigungsverfahren eignet sich insbesondere zur Herstellung von Meterware, die zunächst nicht oder erst in einem späteren Arbeitsschritt in Form gebracht wird.

Das zweite Kunststoffmaterial kann ein Weichkunststoff, etwa mit einer Shore-A-Härte gemäß ISO 868 zwischen 15 und 95 sein. Der Weichkunststoff ist bevorzugt ein TPE-Kunststoff, insbesondere ein TPE-S, TPE-O, TPE-U, TPE-V, TPE-E oder ein TPE-E. Alternativ kann als Weichkunststoff auch ein sich während des Verfahrens oder später vernetzendes Material eingesetzt werden, z.B. ein vernetzbarer thermoplastischer Werkstoff. Die Vernetzung kann unter direkter Zugabe von Vernetzungsadditiven oder anschließend durch eine Strahlenvernetzung erfolgen. Dem Weichkunststoff können zusätzliche elastische Komponenten, insbesondere Kunstoder Naturgummianteile beigemischt werden. Ferner ist es möglich, dem Weichkunststoff oder dem ersten Kunststoffmaterial ein Regenerat oder ein Mahlgut aus Kunststoff- oder Gummirecycling zuzumischen.

Das erste Material wird üblicherweise ein thermoplastischer Kunststoff mit einem Schmelzpunkt oberhalb von 90° sein. Das E-Modul dieses Werkstoffes kann bevorzugt größer als 40 MPas gemäß ISO 527, also insbesondere ein teilkristalliner Werkstoff der Familie der Polyolefine, der Polycarbonate und der Polystyrole sein.

Für den Einsatz in einem Stall können dem Material zusätzliche Stoffe beigemischt werden, etwa Bitterstoffe, die ein Verbeißen der Tiere verhindern. Sowohl die erste als auch die zweite Schicht können mit einem Faserverbund oder mit einem metallischen Verbund verstärkt werden, wobei der Faserverbund sowohl von einem Geflecht als auch von einem Vlies gebildet werden kann. Es ist auch möglich, Faserschnipsel zuzumischen, die eine Verstärkung der Materialien bewirken.

Schließlich weist eine weitere bevorzugte Ausgestaltung des Verfahrens die Möglichkeit auf, dem Material der ersten oder der zweiten Schicht Additive beziehungsweise Treibmittel zuzumischen, die während des Erhitzens und Pressens gasförmig expandieren. Diese können beispielsweise den der Pressplatten abgewandten Grenzschichten zugesetzt werden, so dass sich während des Pressens ein Aufschäumen des Materials und damit ein Integralschaum ergibt. In die zweite Schicht kann eine funktionelle Oberflächenstruktur eingeprägt werden, was zweckmäßigerweise durch entsprechende Formung des Presstempels erfolgt oder in dem als Abdeckschicht eine entsprechend strukturierte Folie verwendet wird, die natürlich infolge des Pressverfahrens nicht geglättet werden darf.

Die erste Schicht, die zweite Schicht oder auch die gesamte Kunststoffplatte kann Lochstrukturen in Form von Kanälen, zum Beispiel zur Abfuhr von Flüssigkeiten oder Feststoffen, aufweisen. Eine solche Lochstruktur ist insbesondere zur Drainage in einem Stall, aber auch in Sportböden gewünscht, so dass Flüssigkeiten wie Harn oder Regenwasser effektiv abgeführt werden können. Das Material der ersten oder der zweiten Schicht ist bevorzugt ein schwer entflammbarer Kunststoff, so dass die Platte auch als Brandschutzplatte eingesetzt werden kann oder zumindest im Falle eines Brandes günstige Eigenschaften hinsichtlich der schweren Entflammbarkeit aufweist. Die Dicke der Platte kann 0,5 cm bis 10 cm betragen, während die Dicke der Einzelschichten innerhalb dieses Bereiches beliebig gewählt werden kann.

Weitere Merkmale und Vorteile der Erfindung ergeben sich aus den Unteransprüchen.

## Patentansprüche

1. Verfahren zur Herstellung einer, aus zumindest einer ersten und einer zweiten Schicht bestehenden Kunststoffplatte in einem Preßverfahren, wobei
• in eine Preßform eine erste Schicht aus rieselfähigen Partikeln eines ersten Kunststoffmaterials eingebracht wird,
• eine zweite Schicht aus rieselfähige Partikeln eines zweiten Kunststoffmaterials auf die erste Schicht aufgebracht wird,
• dann die erste Schicht und die zweite Schicht derart erhitzt werden, daß das Material der zweiten Schicht vor dem Material der ersten Schicht schmilzt und flüssiges Material der zweiten Schicht in Bereiche zwischen noch gekörntem Material eines oberen Grenzbereichs der ersten Schicht fließt wobei sich eine Grenzschicht ausbildet, innerhalb derer sich das aufgeschmolzene Material der zweiten Schicht und das Material der ersten Schicht gegenseitig durchsetzen und
• die erste Schicht und die zweite Schicht gepreßt und erhitzt werden, bis die Partikel aufschmelzen, dann
• die Kunststoffplatte erkaltet, wobei die erste Schicht und die zweite Schicht mit oder ohne Hinterschneidungen formschlüssig miteinander verbunden sind und
• anschließend die so entstandene Platte entnommen wird.

2. Verfahren zur Herstellung einer Kunststoffplatte nach Anspruch 1, **dadurch gekennzeichnet, daß** das erste Kunststoffmaterial und das zweite Kunststoffmaterial eine unterschiedliche Schmelztemperatur aufweisen.

3. Verfahren zur Herstellung einer Kunststoffplatte nach Anspruch 2, **dadurch gekennzeichnet, daß** Temperatur und/oder Druck der zweiten Schicht im flüssigen Zustand solange erhöht werden bis die gewünschte die Dicke der Grenzschicht durch Durchsetzung der ersten Schicht mit der in flüssigem Zustand befindlichen zweiten Schicht erzielt ist.

4. Verfahren zur Herstellung einer Kunststoffplatte nach einem der vorhergehenden Ansprüche, **dadurch gekennzeichnet, daß** zunächst kontinuierlich bis auf eine Temperatur oberhalb des Schmelzpunktes der zweiten Schicht erhitzt wird, dann diese Temperatur während einer Mischzeit gehalten wird und anschließend weiter erhitzt wird, bis eine Temperatur erreicht ist, die oberhalb der Schmelztemperatur der ersten Schicht liegt.

5. Verfahren zur Herstellung einer Kunststoffplatte nach einem der vorhergehenden Ansprüche, **dadurch gekennzeichnet, daß** die Preßform eine obere und eine untere Preßplatte aufweist, wobei die oberen Preßplatte und die untere Preßplatte sowohl eine Wärmezufuhr als auch eine Wärmeabfuhr zu bewirken vermögen und nach dem Erhitzen sowie vor dem Entnehmen der Platte aus der Preßform über die obere und die untere Preßplatte die Platte gekühlt wird.

6. Verfahren zur Herstellung einer Kunststoffplatte nach dem vorhergehenden Anspruch, **dadurch gekennzeichnet, daß** zunächst die zweite Schicht über die obere Preßplatte bis zum Aufschmelzen erhitzt, dann die erste Schicht über die untere Preßplatte erhitzt wird, wobei die zweite Schicht während des Erhitzens der ersten Schicht zur Vermeidung von Zersetzungen bereits über die obere Preßplatte gekühlt wird.

7. Verfahren zur Herstellung einer Kunststoffplatte nach einem der vorhergehenden Ansprüche, **dadurch gekennzeichnet, daß** zwischen die erste und die zweite Schicht eine Zwischenschicht aus einem schmelzbaren Kunststoff eingelegt wird.

8. Verfahren zur Herstellung einer Kunststoffplatte nach dem vorhergehenden Anspruch, **dadurch gekennzeichnet, daß** die Schmelztemperatur der Zwischenschicht oberhalb der Schmelztemperatur des zweiten Kunststoffmaterials liegt.

9. Verfahren zur Herstellung einer Kunststoffplatte nach einem der beiden vorhergehenden Ansprüche, **dadurch gekennzeichnet, daß** als Zwischenschicht eine thermoplastische Folie verwendet wird.

10. Verfahren zur Herstellung einer Kunststoffplatte nach einem der vorhergehenden Ansprüche, **dadurch gekennzeichnet, daß** zwischen der zweiten Schicht und der ersten Schicht, oberhalb der zweiten Schicht oder unterhalb der ersten Schicht zumindest eine weitere Zusatzschicht angeordnet wird.

11. Verfahren zur Herstellung einer Kunststoffplatte nach dem vorhergehenden Anspruch, **dadurch gekennzeichnet, daß** zunächst nach einem der vorstehenden Ansprüche eine Platte hergestellt wird, diese dann gedreht wird, auf die dann oben angeordnete, aus dem Aufschmelzen der ersten Schicht entstandene Bodenschicht eine weitere Schicht aus dem ersten Kunststoffmaterial und dann eine weitere Schicht aus dem zweiten Kunststoffmaterial aufgebracht wird, diese dann über die obere Preßplatte oder einen separaten Erhitzer kontinuierlich erhitzt wird, bis zuerst die weitere Schicht aus dem zweiten Kunststoffmaterial und dann die weitere Schicht aus dem ersten Kunststoffmaterial aufschmilzt.

12. Verfahren zur Herstellung einer Kunststoffplatte nach Anspruch 1, **dadurch gekennzeichnet, daß** in einer ersten Station die erste Schicht und die zweite Schicht auf einen kontinuierlich bewegte Formträger aufgebracht wird, anschließend in einer hinter der ersten Station angeordneten zweiten Station die Erhitzung erfolgt und in einer dahinter angeordneten dritten Station die aufgeschmolzenen Schichten, insbesondere über gegeneinander angestellte Preßrollen, verpreßt und schließlich gekühlt werden.

13. Verfahren zur Herstellung einer Kunststoffplatte nach einem der vorhergehenden Ansprüche, **dadurch gekennzeichnet, daß** als zweites Kunststoffmaterial ein Weichkunststoff mit einer Shore A-Härte gemäß ISO 868 zwischen 15 und 95 eingesetzt wird.

14. Verfahren zur Herstellung einer Kunststoffplatte nach dem vorhergehenden Anspruch, **dadurch gekennzeichnet, daß** der Weichkunststoff ein TPE-Kunststoff, insbesondere ein TPE-S, TPE-O, TPE-U, TPE-V oder ein TPE-A ist.

15. Verfahren zur Herstellung einer Kunststoffplatte nach dem vorhergehenden Anspruch, **dadurch gekennzeichnet, daß** als Weichkunststoff ein während des Verfahrens oder nachfolgend sich vernetzendes Material eingesetzt wird.

16. Verfahren zur Herstellung einer Kunststoffplatte nach einem der beiden vorhergehenden Ansprüche, **dadurch gekennzeichnet, daß** dem Weichkunststoff zusätzlich elastische Komponenten, insbesondere Kunst- oder Naturgummi zugemischt wird.

17. Verfahren zur Herstellung einer Kunststoffplatte nach einem der beiden vorhergehenden Ansprüche, **dadurch gekennzeichnet, daß** dem Weichkunststoff oder dem ersten Kunststoffmaterial Regenerat oder Mahlgut aus dem Kunststoff oder Gummirecycling zugesetzt wird.

18. Verfahren zur Herstellung einer Kunststoffplatte nach einem der vorhergehenden Ansprüche, **dadurch gekennzeichnet, daß** als erstes Material ein thermoplastischer Kunststoff mit einem Schmelzpunkt oberhalb von 90° C und einem Elastizitätsmodul (E-Modul) von größer als 40 MPas gemäß ISO 527, insbesondere ein teilkristalliner Werkstoff aus der Familie der Polyolefine, Polycarbonate oder Polystyrole eingesetzt wird.

19. Verfahren zur Herstellung einer Kunststoffplatte zum Einsatz in der Viehhaltung nach einem der vorhergehenden Ansprüche, **dadurch gekennzeichnet, daß** dem zweiten Material zusätzliche, für Tiere unangenehme Geschmacksstoffe, insbesondere Bitterstoffe zugesetzt werden.

20. Verfahren zur Herstellung einer Kunststoffplatte nach einem der vorhergehenden Ansprüche, **dadurch gekennzeichnet, daß** in die zweite oder die erste Schicht ein von einem Faserverbund oder einem metallischen Verbund gebildetes Geflecht oder Vlies eingelegt wird.

21. Verfahren zur Herstellung einer Kunststoffplatte nach einem der vorhergehenden Ansprüche, **dadurch gekennzeichnet, daß** die zweite Schicht und/oder die erste Schicht Partikel aufweist, denen zur Bildung eines Integralschaums mit kompakter Oberfläche während des Erhitzens und Preßens zusätzliche Treibmittel zugefügt sind.

22. Verfahren zur Herstellung einer Kunststoffplatte, nach einem der vorhergehenden Ansprüche, **dadurch gekennzeichnet, daß** in die zweite Schicht eine reliefartige Oberflächenstruktur eingeprägt wird.

23. Verfahren zur Herstellung einer Kunststoffplatte, nach einem der vorhergehenden Ansprüche, **dadurch gekennzeichnet, daß** in die zweite Schicht oder durchgehend durch beide Schichten, die zweite Schicht und die erste Schicht von der Oberfläche ausgehende Lochstrukturen in Form von Kanälen zur Abfuhr von Flüssigkeiten oder Feststoffen eingebracht werden.

24. Kunststoffplatte, **dadurch gekennzeichnet, daß** sie nach einem Verfahren nach einem der vorhergehenden Ansprüche hergestellt ist, wobei sie eine zweite Schicht aus Kunststoff und eine mit der zweiten Schicht verbundene erste Schicht aus Kunststoff aufweist und die Verbindung der ersten Schicht mit der zweiten Schicht über eine formschlüssige Verzahnung von sich in die erste Schicht aderartig erstreckenden Materialeinschlüssen der zweiten Schicht mit Ausnehmungen in der ersten Schicht gebildet ist.

25. Kunststoffplatte nach dem vorhergehenden Anspruch, **dadurch gekennzeichnet, daß** zwischen der zweiten Schicht und der ersten Schicht eine Zwischenschicht angeordnet ist.

26. Kunststoffplatte nach einem der Ansprüche 24 oder 25, **dadurch gekennzeichnet, daß** die obere Schicht aus einem TPE-Kunststoff, insbesondere einem TPE-S, TPE-O, TPE-U, TPE-V oder ein TPE-E ist.

27. Kunststoffplatte nach einem der Ansprüche 24 bis 26, **dadurch gekennzeichnet, daß** die erste Schicht aus einem relativ zum zweiten Kunststoffmaterial, aus dem die zweite Schicht hergestellt ist, härteren Kunststoffmaterial hergestellt ist.

28. Kunststoffplatte nach einem der Ansprüche 24 bis 27, **dadurch gekennzeichnet, daß** die zweite Schicht und/oder die erste Schicht aus einem schwerentflammbaren Kunststoff hergestellt sind.

29. Kunststoffplatte nach einem der Ansprüche 24 bis 28, **dadurch gekennzeichnet, daß** sie eine Dicke von 0,5 bis 10 cm aufweist.

30. Kunststoffplatte nach einem der Ansprüche 24 bis 29, **dadurch gekennzeichnet, daß** die zweite Schicht eine eingeprägte Oberflächenstruktur aufweist.

31. Kunststoffplatte nach einem der Ansprüche 24 bis 30, **dadurch gekennzeichnet, daß** sie Lochstrukturen in Form von Kanälen zur Abfuhr von Flüssigkeiten oder Feststoffen aufweist, die ausgehend von der Oberfläche der zweiten Schicht die zweite Schicht oder durchgehend durch beide Schichten, die zweite Schicht und die erste Schicht durchsetzen.

32. Kunststoffplatte nach einem der Ansprüche 24 bis 31, **dadurch gekennzeichnet, daß** die obere Schicht mit einer zusätzlichen Deckschicht versehen ist.

33. Kunststoffplatte nach einem der Ansprüche 24 bis 32, **dadurch gekennzeichnet, daß** dem Material der ersten Schicht und/oder dem Material der zweiten Schicht UV-, Bio- oder Chlorstabilisatoren beigemischt sind.

## Claims

1. A method for producing a plastic sheet consisting of at least a first layer and a second layer in a compression molding process, wherein
• a first layer of free flowing particles of a first plastic material is introduced into the compression mold;
• a second layer of free flowing particles of a second plastic material is applied to the first layer;
• the first layer and the second layer are then heated in such a way that the material of the second layer melts before the material of the first layer, and liquid material of the second layer flows into regions between still granular material of an upper boundary region of the first layer, a boundary layer forming in the process, in which the molten material of the second layer and the material of the first layer are dispersed; and
• the first layer and the second layer are pressed and heated until the particles melt; then
• the plastic sheet cools down, the first layer and the second layer being positively interconnected with or without undercuts; and
• the sheet thus obtained is subsequently removed.

2. A method for producing a plastic sheet according to claim 1, **characterized in that** the first plastic material and the second plastic material have different melting temperatures.

3. A method for producing a plastic sheet according to claim 2, **characterized in that** temperature and/or pressure of the second layer are increased in the liquid state until the desired thickness of the boundary layer is achieved by interspersing the first layer with the second layer, which is in the liquid state.

4. A method for producing a plastic sheet according to any of the previous claims, **characterized in that** it is first continuously heated to a temperature above the melting point of the second layer, this temperature is then maintained during a mixing time, and it is subsequently further heated until a temperature above the melting temperature of the first layer is reached.

5. A method for producing a plastic sheet according to any of the previous claims, **characterized in that** the compression mold has an upper and lower pressing plate, the upper pressing plate and the lower pressing plate being able to both supply heat and remove heat, and the sheet being cooled down by means of the upper and lower pressing plate prior to removal of the sheet from the compression mold.

6. A method for producing a plastic sheet according to the previous claim, **characterized in that** first the second layer is heated by means of the upper pressing plate until it melts, then the first layer is heated by means of the lower pressing plate, the second layer already being cooled by means of the upper pressing plate during heating of the first layer to avoid decompositions.

7. A method for producing a plastic sheet according to any of the previous claims, **characterized in that** an intermediate layer of a meltable plastic material is placed between the first layer and the second layer.

8. A method for producing a plastic sheet according to the previous claim, **characterized in that** the melting temperature of the intermediate layer is above the melting temperature of the second plastic material.

9. A method for producing a plastic sheet according to any of the two previous claims, **characterized in that** a thermoplastic film is used as intermediate layer.

10. A method for producing a plastic sheet according to any of the previous claims, **characterized in that** at least one further additional layer is arranged between the second layer and the first layer, above the second layer or below the first layer.

11. A method for producing a plastic sheet according to the previous claim, **characterized in that** first a sheet is produced according to any of the previous claims, this sheet is then turned over, a further layer of the first plastic material and then a further layer of the second plastic material is applied to the bottom layer formed by melting the first layer and now arranged on top, this is then continuously heated by means of the upper pressing plate or a separate heater until first the further layer of the second plastic material and then the further layer of the first plastic material melts.

12. A method for producing a plastic sheet according to claim 1, **characterized in that** in a first station the first layer and the second layer is applied to a continuously moving mold support, subsequently in a second station disposed downstream of the first station heating takes place, and in a third station disposed downstream of the second station the molten layers are molded, in particular by means of pressure rollers set against each other, and finally cooled.

13. A method for producing a plastic sheet according to any of the previous claims, **characterized in that** as second plastic material a soft plastic material having a Shore A hardness in accordance with ISO 868 between 15 and 95 is used.

14. A method for producing a plastic sheet according to the previous claim, **characterized in that** the soft plastic material is a TPE plastic material, in particular TPE-S, TPE-O, TPE-U, TPE-V or TPE-A.

15. A method for producing a plastic sheet according to the previous claim, **characterized in that** a material cross-linking either during the process or subsequently is used as soft plastic material.

16. A method for producing a plastic sheet according to any of the two previous claims, **characterized in that** elastic components, in particular synthetic or natural rubber, are additionally added to the soft plastic material.

17. A method for producing a plastic sheet according to any of the two previous claims, **characterized in that** reclaim or grinding material from plastic or rubber recycling is added to the soft plastic material or the first plastic material.

18. A method for producing a plastic sheet according to any of the previous claims, **characterized in that** as first material a thermoplastic material having a melting point above 90 °C and an elastic modulus (E modulus) of greater than 40 MPas in accordance with ISO 527, in particular a partially crystalline material from the family of polyolefins, polycarbonates or polystyrenes is used.

19. A method for producing a plastic sheet for use in livestock farming according to any of the previous claims, **characterized in that** additional flavor additives, which are unpleasant for animals, in particular bitter substances, are added to the second material.

20. A method for producing a plastic sheet according to any of the previous claims, **characterized in that** a mesh or non-woven formed by a fiber composite or metal composite is placed in the second layer or first layer.

21. A method for producing a plastic sheet according to any of the previous claims, **characterized in that** the second layer and/or first layer comprises particles to which additional foaming agents are added during heating and molding for forming an integral skin foam with a compact surface.

22. A method for producing a plastic sheet according to any of the previous claims, **characterized in that** a relief-like surface structure is embossed into the second layer.

23. A method for producing a plastic sheet according to any of the previous claims, **characterized in that** hole structures in the form of channels, which start at the surface, are placed in the second layer or extending continuously through both layers, the second layer and the first layer, to remove liquids or solids.

24. A plastic sheet **characterized in that** it is produced by a method according to any of the previous claims, said plastic sheet comprising a second layer of plastic material and a first layer of plastic material connected with the second layer, and the connection of the first layer with the second layer being formed via positive interlocking of material inclusions of the second layer extending veinlike into the first layer with recesses in the first layer.

25. A plastic sheet according to the previous claim, **characterized in that** an intermediate layer is arranged between the second layer and the first layer.

26. A plastic sheet according to any of claims 24 or 25, **characterized in that** the upper layer is made of a TPE plastic material, in particular TPE-S, TPE-O, TPE-U, TPE-V or TPE-E.

27. A plastic sheet according to any of claims 24 to 26, **characterized in that** the first layer is produced of a plastic material that is harder compared to the second plastic material of which the second layer is made.

28. A plastic sheet according to any of claims 24 to 27, **characterized in that** the second layer and/or the first layer is produced of a plastic material of low flammability.

29. A plastic sheet according to any of claims 24 to 28, **characterized in that** it has a thickness of 0.5 to 10 cm.

30. A plastic sheet according to any of claims 24 to 29, **characterized in that** the second layer has an embossed surface structure.

31. A plastic sheet according to any of claims 24 to 30, **characterized in that** it has hole structures in the form of channels to remove liquids or solids, which starting from the surface penetrate the second layer or extend continuously through both layers, the second layer and the first layer.

32. A plastic sheet according to any of claims 24 to 31, **characterized in that** the upper layer is provided with an additional cover layer.

33. A plastic sheet according to any of claims 24 to 32, **characterized in that** UV, bio or chlorine stabilizers are added to the material of the first layer and/or the material of the second layer.

## Revendications

1. Procédé de fabrication d'une plaque en matière plastique consistant dans au moins une première et une deuxième couche dans un procédé de moulage,
* une première couche de particules coulantes d'une première matière plastique étant introduite dans un moule par pression,
* une deuxième couche de particules coulantes d'une deuxième matière plastique étant appliquée sur la première couche,
* la première couche et la deuxième couche étant alors échauffées de sorte que la matière de la deuxième couche fonde avant la matière de la première couche et que de la matière liquide de la deuxième couche s'écoule dans des zones entre de la matière encore granulée d'une zone limite supérieure de la première couche, une couche limite se formant, à l'intérieur de laquelle la matière fondue de la deuxième couche et la matière de la première couche s'entremêlent mutuellement et
* la première couche et la deuxième couche étant comprimées et échauffées, jusqu'à ce que les particules fondent, alors qu'ensuite
* la plaque en matière plastique refroidit, la première couche et la deuxième couche étant reliées entre elles par complémentarité de forme, avec ou sans contre-dépouille et
* la plaque ainsi obtenue étant ensuite retirée.

2. Procédé de fabrication d'une plaque en matière plastique selon la revendication 1, **caractérisé en ce que** la première matière plastique et la deuxième matière plastique présentent une température de fusion différente.

3. Procédé de fabrication d'une plaque en matière plastique selon la revendication 2, **caractérisée en ce que** la température et/ou la pression de la deuxième couche sont élevées à l'état liquide jusqu'à ce que l'épaisseur souhaitée de la couche limite soit atteinte par entrelacement de la première couche par la deuxième couche se trouvant à l'état liquide.

4. Procédé de fabrication d'une plaque en matière plastique selon l'une quelconque des revendications précédentes, **caractérisée en ce que** dans un premier temps, on chauffe en continu jusqu'à une température supérieure au point de fusion de la deuxième couche, **en ce qu'**on maintient ensuite cette température pendant un temps de mélange et **en ce qu'**on continue à chauffer ensuite jusqu'à l'atteinte d'une température qui est supérieure au point de fusion de la première couche.

5. Procédé de fabrication d'une plaque en matière plastique selon l'une quelconque des revendications précédentes, **caractérisé en ce que** le moule par pression comporte une plaque de pression supérieure et une plaque de pression inférieure, la plaque de pression supérieure et la plaque de pression inférieure étant susceptibles d'initier aussi bien un apport de chaleur qu'une évacuation de chaleur et après la chauffe tout comme avant le retrait de la plaque hors du moule par pression, la plaque étant refroidie par l'intermédiaire de la plaque de pression supérieure et par l'intermédiaire de la plaque de pression inférieure

6. Procédé de fabrication d'une plaque en matière plastique selon l'une quelconque des revendications précédentes, **caractérisé en ce qu'**on chauffe d'abord jusqu'à la fusion la deuxième couche par l'intermédiaire de la plaque de pression supérieure, puis la première couche par l'intermédiaire de la plaque de pression inférieure, pendant l'échauffement de la première couche, la deuxième couche étant d'ores et déjà refroidie par l'intermédiaire de la plaque de pression supérieure, pour éviter des décompositions.

7. Procédé de fabrication d'une plaque en matière plastique selon l'une quelconque des revendications précédentes, **caractérisé en ce qu'**on insère entre la première et la deuxième couche une couche intermédiaire en une matière plastique fusible.

8. Procédé de fabrication d'une plaque en matière plastique selon la revendication, précédente, **caractérisé en ce que** la température de fusion de la couche intermédiaire est supérieure à la température de fusion de la deuxième matière plastique.

9. Procédé de fabrication d'une plaque en matière plastique selon l'une quelconque des deux revendications précédentes, **caractérisé en ce qu'**on utilise un film thermoplastique en tant que couche intermédiaire.

10. Procédé de fabrication d'une plaque en matière plastique selon l'une quelconque des revendications précédentes, **caractérisé en ce qu'**on dispose entre la deuxième et le première couche, au dessus de la deuxième couche ou en dessous de la première couche au moins une couche additive supplémentaire.

11. Procédé de fabrication d'une plaque en matière plastique selon la revendication précédente, **caractérisé en ce que** dans un premier temps, on fabrique une plaque en matière plastique selon l'une quelconque des revendications précédentes, **en ce qu'**on la façonne ensuite au tour, **en ce qu'**on applique ensuite sur la couche de fond alors disposée sur le dessus, émanant de la fusion de la première couche une couche supplémentaire consistant dans la première matière plastique et ensuite une couche supplémentaire consistant dans la deuxième matière plastique, **en ce qu'**on échauffe ensuite en continu celle-ci par l'intermédiaire de la plaque de pression supérieure ou d'un réchauffeur séparé, jusqu'à ce que d'abord la couche supplémentaire consistant dans la deuxième matière plastique et ensuite la couche supplémentaire consistant dans la première matière plastique fonde.

12. Procédé de fabrication d'une plaque en matière plastique selon la revendication 1, **caractérisé en ce que** dans un premier poste, on applique la première et la deuxième couche sur un support de moule déplacé en continu, **en ce qu'**ensuite dans un deuxième poste disposé derrière le premier poste, l'échauffement s'effectue et dans un troisième poste situé derrière ce dernier, les couches fondues sont pressées et finalement refroidies, notamment par l'intermédiaire de rouleaux de pression mis en prise réciproque.

13. Procédé de fabrication d'une plaque en matière plastique selon l'une quelconque des revendications précédentes, **caractérisé en ce qu'**on met en oeuvre en tant que deuxième matière plastique une matière plastique souple d'une dureté shore A selon ISO 868 comprise entre 15 et 85.

14. Procédé de fabrication d'une plaque en matière plastique selon la revendication précédente, **caractérisé en ce que** la matière plastique souple est une matière plastique TPE, notamment un TPE-S, un TPE-O, un TPE-U, un TPE-V ou un TPE-A.

15. Procédé de fabrication d'une plaque en matière plastique selon la revendication précédente, **caractérisé en ce qu'**on met en oeuvre en tant que matière plastique souple une matière réticulant pendant le procédé ou par la suite.

16. Procédé de fabrication d'une plaque en matière plastique selon l'une quelconque des revendications précédentes, **caractérisé en ce qu'**on mélange additionnellement à la matière plastique souple des composants élastiques, notamment du caoutchouc synthétique ou naturel.

17. Procédé de fabrication d'une plaque en matière plastique selon l'une quelconque des deux revendications précédentes, **caractérisé en ce qu'**on additionne à la matière plastique souple ou à la première matière plastique un caoutchouc régénéré ou une matière moulue consistant dans la matière plastique ou du caoutchouc recyclé.

18. Procédé de fabrication d'une plaque en matière plastique selon l'une quelconque des revendications précédentes, **caractérisé en ce qu'**on met en oeuvre en tant que première matière une matière thermoplastique avec un point de fusion supérieur à 90°C et un module d'élasticité (module d'élasticité E) supérieur à 90 MPa selon ISO 527, notamment en un matériau partiellement cristallin de la famille des polyoléfines, des polycarbonates ou des polystyrènes.

19. Procédé de fabrication d'une plaque en matière plastique pour l'utilisation dans l'élevage selon l'une quelconque des revendications précédentes, **caractérisé en ce qu'**on additionne à la deuxième matière des aromates artificiels supplémentaires désagréables pour les animaux, notamment des substances amères.

20. Procédé de fabrication d'une plaque en matière plastique selon l'une quelconque des revendications précédentes, **caractérisé en ce qu'**on insère dans la deuxième ou dans la première couche une structure ou un non-tissé formé d'un matériau renforcé par des fibres ou d'un composite métallique.

21. Procédé de fabrication d'une plaque en matière plastique selon l'une quelconque des revendications précédentes, **caractérisé en ce que** la deuxième couche et/ou la première couche comporte(nt) des particules auxquelles, pour former une mousse intégrale à surface compacte, on ajoute pendant l'échauffement et la compression des agents gonflants supplémentaires.

22. Procédé de fabrication d'une plaque en matière plastique selon l'une quelconque des revendications précédentes, **caractérisé en ce qu'**on gaufre dans la deuxième couche une structure superficielle à relief.

23. Procédé de fabrication d'une plaque en matière plastique selon l'une quelconque des revendications précédentes, **caractérisé en ce qu'**on intègre dans la deuxième couche, ou de bout en bout à travers les deux couches, la deuxième couche et la première couche des structures perforées partant de la surface sous forme de canaux pour l'évacuation de liquides ou de solides.

24. Plaque en matière plastique, **caractérisée en ce qu'**elle est fabriqué d'après un procédé selon l'une quelconque des revendications précédentes, alors qu'elle comporte une deuxième couche en matière plastique et une première couche en matière plastique reliée avec la deuxième couche et **en ce que** la liaison de la première couche avec la deuxième couche est formée par un endentement par complémentarité de forme d'inclusions de matière de la deuxième couche s'étendant sous forme de veines dans la première couche, avec des évidements dans la première couche.

25. Plaque en matière plastique selon la revendication précédente, **caractérisée en ce qu'**entre la deuxième couche et la première couche est disposée une couche intermédiaire.

26. Plaque en matière plastique selon l'une quelconque des revendications 24 ou 25, **caractérisée en ce que** la couche supérieure est en une matière plastique TPE, notamment TPE-S, TPE-O, TPE-U, TPE-V ou en un TPE-E.

27. Plaque en matière plastique selon l'une quelconque des revendications 24 à 26, **caractérisée en ce que** la première couche est fabriquée en une matière plastique plus dure par rapport à la deuxième matière plastique dans laquelle est fabriquée la deuxième couche.

28. Plaque en matière plastique selon l'une quelconque des revendications 24 à 27, **caractérisée en ce que** la deuxième couche et/ou la première couche sont fabriquées dans une matière plastique difficilement inflammable.

29. Plaque en matière plastique selon l'une quelconque des revendications 24 à 28, **caractérisée en ce qu'**elle présente une épaisseur de 0,5 à 10 cm.

30. Plaque en matière plastique selon l'une quelconque des revendications 24 à 29, **caractérisée en ce que** la deuxième couche comporte une structure superficielle gaufrée.

31. Plaque en matière plastique selon l'une quelconque des revendications 24 à 30, **caractérisée en ce qu'**elle comporte des structures perforées sous la forme de canaux pour l'évacuation de liquides ou de solides, qui en partant de la surface de la deuxième couche traversent la deuxième couche, ou en continu à travers les deux couches, traversent la deuxième couche et la première couche.

32. Plaque en matière plastique selon l'une quelconque des revendications 24 à 31, **caractérisée en ce que** la couche supérieure est munie d'une couche de couverture supplémentaire.

33. Plaque en matière plastique selon l'une quelconque des revendications 24 à 32, **caractérisée en ce qu'**on mélange à la matière de la première couche et/ou à la matière de la deuxième couche des stabilisateurs d'UV, des biostabilisateurs ou des stabilisateurs de chlore.
